(19) Europäisches Patentamt

European Patent Office

Office européen des brevets

(11) **EP 4 383 804 A1**

(12) # EUROPEAN PATENT APPLICATION
published in accordance with Art. 153(4) EPC

(43) Date of publication:
**12.06.2024 Bulletin 2024/24**

(21) Application number: **22851810.6**

(22) Date of filing: **06.07.2022**

(51) International Patent Classification (IPC):
**H04W 28/04** *(2009.01)* **H04W 76/14** *(2018.01)*

(52) Cooperative Patent Classification (CPC):
**H04W 28/04; H04W 76/14**

(86) International application number:
**PCT/CN2022/104134**

(87) International publication number:
**WO 2023/011095 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.08.2021 CN 202110897357**

(71) Applicant: **Datang Mobile Communications
Equipment Co., Ltd.
Beijing 100085 (CN)**

(72) Inventor: **REN, Xiaotao
Beijing 100085 (CN)**

(74) Representative: **Studio Torta S.p.A.
Via Viotti, 9
10121 Torino (IT)**

(54) **INFORMATION PROCESSING METHOD, TERMINAL, AND READABLE STORAGE MEDIUM**

(57) The present disclosure discloses an information processing method, a terminal and a readable storage medium for improving a success rate of data transmission on a sidelink, and relates to the field of communication technologies. The method includes: transmitting, by a first terminal, first indication information to a second terminal through a first channel. The first indication information is used to indicate whether there is a resource conflict on a target physical sidelink shared channel (PSSCH) resource. The first channel is a sequence-based second channel; or, the first channel is a Type 2 physical sidelink feedback channel (Type2 PS-FCH).

FIG. 1

EP 4 383 804 A1

# Description

## CROSS-REFERENCE TO RELATED APPLICATION

The present disclosure claims the priority of Chinese Application No. 202110897357.4, filed on August 5, 2021, the disclosure of which is incorporated in its entirety by reference herein.

## TECHNICAL FIELD

The present disclosure relates to the field of communication technologies, and in particular to an information processing method, terminal and readable storage medium.

## BACKGROUND

In the fifth-generation (5G) mobile communication technology New Radio (NR) vehicle-to-everything (V2X) system, direct communication between terminals is performed on a sidelink therebetween. Before transmission of service data, it is first necessary to determine time-frequency resources used for transmission of data on the sidelink. A main criterion for determining the time-frequency resources is to avoid collisions between time-frequency resources used by different terminals to avoid mutual interference.

In the NR V2X, there are two resource scheduling modes, including a first one that is a Mode 1 resource allocation mode in which a base station uniformly schedules time-frequency resources used in sidelink communication between terminals, and a second one that is a mode 2 resource allocation mode in which the terminals independently select time-frequency resources used in sidelink communication between the terminals without participation of the base station.

The NR-V2X Mode 2 uses distributed resource scheduling, and there is no unified scheduling by the base station, thus the terminal needs to determine resource occupancy of other terminals through a resource awareness mechanism and select resources based on a resource-aware result. Compared with a completely random resource selection mechanism, the resource awareness mechanism can improve resource utilization, reduce collision probability and improve system performance.

In the related art, in the Mode 2 resource allocation mode, the terminal will exclude resources based on its own resource aware results, that is, the terminal will eliminate conflicting resources perceived by itself. However, in the related art, the terminal determines the conflicting resources only through its own perception, which affects a success rate of data transmission on a sidelink.

# SUMMARY

Embodiments of the present disclosure provide an information processing method, a terminal and a readable storage medium, which can improve a success rate of data transmission on a sidelink.

In a first aspect, one embodiment of the present disclosure provides an information processing method, which includes:

transmitting, by a first terminal, first indication information to a second terminal through a first channel; wherein the first indication information is used to indicate whether there is a resource conflict on a target physical sidelink shared channel (PSSCH) resource; wherein the first channel is a sequence-based second channel; or, the first channel is a Type 2 physical sidelink feedback channel (Type2 PSFCH).

When the first channel is the sequence-based second channel, the transmitting, by a first terminal, first indication information to a second terminal through a first channel, includes:

transmitting, by the first terminal, the first indication information to the second terminal through different sequences of the second channel, wherein the first indication information is used to indicate whether there is a resource conflict in resources occupied by PSSCH corresponding to the second channel; or, transmitting, by the first terminal, the first indication information to the second terminal through a same sequence with different cyclic shift values of the second channel, wherein the first indication information is used to indicate whether there is a resource conflict in resources occupied by PSSCH corresponding to the second channel.

A sequence length of the second channel is 12 and occupies 12 subcarriers of a resource block (RB); the cyclic shift value is selected from a set $\{1, 2, 3, 6\}$.

The second channel occupies one or two symbols; when the second channel occupies two symbols, a first symbol occupied by the second channel and a second symbol occupied by the second channel are duplicated.

One second channel is used to indicate whether there is a resource conflict in resources occupied by one or more PSSCHs.

When one second channel is used to indicate whether there is a resource conflict in resources occupied by one PSSCH, if information represented by the second channel meets a first condition, it means that there is a resource conflict in the resources occupied by the PSSCH; if the information represented by the second channel meets a second condition, it means that there is no resource conflict in the resources occupied by the PSSCH; the first condition and the second condition are different.

When one second channel is used to indicate whether there is a resource conflict in resources occupied by multiple PSSCHs, if information represented by the second channel meets a third condition, it indicates that there is a resource conflict in resources occupied by at least one of the multiple PSSCHs; if the information represented by the second channel meets a fourth condition, it means that there is no resource conflict in resources occupied by each of the multiple PSSCHs; the third condition and the fourth condition are different.

The second channel is time-division multiplexed or frequency-division multiplexed with PSCCH or PSSCH.

The method further includes determining frequency domain resources occupied by the second channel in a manner including:

calculating an index number of the second channel based on one or more of the following information:

an index number of the first terminal and an index number of the second terminal.

The method further includes determining the index number of the second channel in any of the following ways:

when a feedback mode is unicast and multicast and feedback is only required on whether there is a resource conflict, using a Layer-1 source identity document (L1 source ID) of the second terminal to calculate the index number of the second channel;
when the feedback mode is multicast and feedback is required on whether there is a resource conflict, using the L1 source ID of the second terminal and a member ID to which the first terminal belongs to calculate the index number of the second channel.

If the second channel and PSFCH occupy different symbols in a same slot or occupy different slots, the calculating an index number of the second channel, includes:

$$PSRCH\_Index=(K+M)Mod(L*Y)$$

wherein PSRCH_Index represents the index number of the second channel;
K represents a truncated layer-2 (L2) source ID carried in sidelink control information (SCI) associated with PSSCH transmitted by the first terminal or the second terminal;
M represents a calculation parameter, which is related to a resource conflict feedback mode;
L represents the number of PRBs of candidate resources of the second channel;
Y represents the number of cyclic shift value pairs of resource conflict feedback that can be carried in a PRB.

When the resource conflict feedback mode is unicast resource conflict feedback, M=0;
when the resource conflict feedback mode is multicast resource conflict feedback, M=0 or M is a multicast member ID of a receiving terminal.

When the first channel is Type2 PSFCH, the transmitting, by a first terminal, first indication information to a second terminal through a first channel, includes:
transmitting the first indication information to the second terminal through the Type2 PSFCH on a target resource, wherein the target resource is PSFCH resource which is not used by terminals of a target type.

The method further includes: receiving, by the first terminal, second indication information; wherein the second indication information is used to indicate a priority between a first mode and a second mode, the first mode is to indicate whether a resource indicated by SCI is received correctly, and the second mode is to indicate whether there is a resource conflict on the resource indicated by the SCI;
wherein when the first indication information is used to indicate whether the resource indicated by the SCI is received correctly and whether there is a resource conflict on the resource indicated by the SCI, the transmitting, by a first terminal, first indication information to a second terminal through a first channel, includes:

if it is determined according to the second indication information that a priority of the first mode is higher than a priority of the second mode, only feeding back by the first terminal, through the Type2 PSFCH, whether the resource indicated by the SCI is received correctly;
if it is determined according to the second indication information that the priority of the first mode is lower than the priority of the second mode, only indicating by the first terminal, through the Type2 PSFCH, whether there is a resource conflict on the resource indicated by the SCI.

In a second aspect, one embodiment of the present disclosure provides an information processing method, which includes:

receiving, by a second terminal, first indication information; wherein the first indication information is used to indicate whether there is a resource conflict on a target physical sidelink shared channel (PSSCH) resource; and
selecting, by the second terminal, a transmission resource, according to the first indication information; wherein the first channel is a sequence-based second channel; or, the first channel is Type2 PSFCH.

In a third aspect, one embodiment of the present disclosure provides a first terminal, including: a memory, a transceiver and processor;

wherein the memory is used to store a computer program; the transceiver is used to receive and transmit data under control of the processor; the processor is used to read the computer program in the memory and perform the following steps:

transmitting first indication information to a second terminal through a first channel; wherein the first indication information is used to indicate whether there is a resource conflict on a target physical sidelink shared channel (PSSCH) resource;

wherein the first channel is a sequence-based second channel; or, the first channel is a Type 2 physical sidelink feedback channel (Type2 PSFCH).

When the first channel is the sequence-based second channel, the processor is further used to read the computer program in the memory and perform the following steps:

transmitting the first indication information to the second terminal through different sequences of the second channel, wherein the first indication information is used to indicate whether there is a resource conflict in resources occupied by PSSCH corresponding to the second channel; or,

transmitting the first indication information to the second terminal through a same sequence with different cyclic shift values of the second channel, wherein the first indication information is used to indicate whether there is a resource conflict in resources occupied by PSSCH corresponding to the second channel.

A sequence length of the second channel is 12 and occupies 12 subcarriers of a resource block (RB); the cyclic shift value is selected from a set {1, 2, 3, 6}.

The second channel occupies one or two symbols; when the second channel occupies two symbols, a first symbol occupied by the second channel and a second symbol occupied by the second channel are duplicated.

One second channel is used to indicate whether there is a resource conflict in resources occupied by one or more PSSCHs.

When one second channel is used to indicate whether there is a resource conflict in resources occupied by one PSSCH, if information represented by the second channel meets a first condition, it means that there is a resource conflict in the resources occupied by the PSSCH; if the information represented by the second channel meets a second condition, it means that there is no resource conflict in the resources occupied by the PSSCH; the first condition and the second condition are different.

When one second channel is used to indicate whether there is a resource conflict in resources occupied by multiple PSSCHs, if information represented by the second channel meets a third condition, it indicates that there is a resource conflict in resources occupied by at least one of the multiple PSSCHs; if the information represented by the second channel meets a fourth condition, it means that there is no resource conflict in resources occupied by each of the multiple PSSCHs; the third condition and the fourth condition are different.

The second channel is time-division multiplexed or frequency-division multiplexed with PSCCH or PSSCH.

The processor is further used to read the computer program in the memory and perform the following steps:

calculating an index number of the second channel based on one or more of the following information:

an index number of the first terminal and an index number of the second terminal.

The processor is further used to read the computer program in the memory and perform the following steps: determining the index number of the second channel in any of the following ways:

when a feedback mode is unicast and multicast and feedback is only required on whether there is a resource conflict, using a Layer-1 source identity document (L1 source ID) of the second terminal to calculate the index number of the second channel;

when the feedback mode is multicast and feedback is required on whether there is a resource conflict, using the L1 source ID of the second terminal and a member ID to which the first terminal belongs to calculate the index number of the second channel.

The processor is further used to read the computer program in the memory and perform the following steps:

if the second channel and PSFCH occupy different symbols in a same slot or occupy different slots, calculating an index number of the second channel in the following way:

$$PSRCH\_Index = (K+M)Mod(L*Y)$$

wherein PSRCH_Index represents the index number of the second channel;

K represents a truncated layer-2 (L2) source ID carried in sidelink control information (SCI) associated with PSSCH transmitted by the first terminal or the second terminal;

M represents a calculation parameter, which is related to a resource conflict feedback mode;

L represents the number of PRBs of candidate resources of the second channel;

Y represents the number of cyclic shift value pairs of resource conflict feedback that can be carried in a PRB.

When the resource conflict feedback mode is unicast resource conflict feedback, M=0; when the resource conflict feedback mode is multicast resource conflict feedback, M=0 or M is a multicast member ID of a receiving terminal.

When the first channel is Type2 PSFCH, the processor is further used to read the computer program in the memory and perform the following steps: transmitting the first indication information to the second terminal through the Type2 PSFCH on a target resource, wherein the target resource is PSFCH resource which is not used by terminals of a target type.

The processor is further used to read the computer program in the memory and perform the following steps:

receiving, by the first terminal, second indication information; wherein the second indication information is used to indicate a priority between a first mode and a second mode, the first mode is to indicate whether a resource indicated by SCI is received correctly, and the second mode is to indicate whether there is a resource conflict on the resource indicated by the SCI;

wherein when the first indication information is used to indicate whether the resource indicated by the SCI is received correctly and whether there is a resource conflict on the resource indicated by the SCI, the transmitting, by a first terminal, first indication information to a second terminal through a first channel, includes:

if it is determined according to the second indication information that a priority of the first mode is higher than a priority of the second mode, only feeding back by the first terminal, through the Type2 PSFCH, whether the resource indicated by the SCI is received correctly;

if it is determined according to the second indication information that the priority of the first mode is lower than the priority of the second mode, only indicating by the first terminal, through the Type2 PSFCH, whether there is a resource conflict on the resource indicated by the SCI.

In a fourth aspect, one embodiment of the present disclosure further provides a second terminal, including: a memory, a transceiver and processor; wherein the memory is used to store a computer program; the transceiver is used to receive and transmit data under control of the processor; the processor is used to read the computer program in the memory and perform the following steps:

transmitting first indication information to a second terminal through a first channel; wherein the first indication information is used to indicate whether there is a resource conflict on a target physical sidelink shared channel (PSSCH) resource;

wherein the first channel is a sequence-based second channel; or, the first channel is a Type 2 physical sidelink feedback channel (Type2 PSFCH).

In a fifth aspect, one embodiment of the present disclosure further provides first terminal, including:

a first transmission unit configured to transmit first indication information to a second terminal through a first channel; wherein the first indication information is used to indicate whether there is a resource conflict on a target physical sidelink shared channel (PSSCH) resource;

wherein the first channel is a sequence-based second channel; or, the first channel is a Type 2 physical sidelink feedback channel (Type2 PSFCH).

When the first channel is the sequence-based second channel, the first transmission unit is configured to transmit the first indication information to the second terminal through different sequences of the second channel, wherein the first indication information is used to indicate whether there is a resource conflict in resources occupied by PSSCH corresponding to the second channel; or, transmit the first indication information to the second terminal through a same sequence with different cyclic shift values of the second channel, wherein the first indication information is used to indicate whether there is a resource conflict in resources occupied by PSSCH corresponding to the second channel.

A sequence length of the second channel is 12 and occupies 12 subcarriers of a resource block (RB); the cyclic shift value is selected from a set {1, 2, 3, 6}.

The second channel occupies one or two symbols; when the second channel occupies two symbols, a first symbol occupied by the second channel and a second symbol occupied by the second channel are duplicated.

One second channel is used to indicate whether there is a resource conflict in resources occupied by one or more PSSCHs.

When one second channel is used to indicate whether there is a resource conflict in resources occupied by one PSSCH, if information represented by the second channel meets a first condition, it means that there is a resource conflict in the resources occupied by the PSSCH; if the information represented by the second channel meets a second condition, it means that there is no resource conflict in the resources occupied by the PSSCH; the first condition and the second condition are different.

When one second channel is used to indicate whether there is a resource conflict in resources occupied by multiple PSSCHs, if information represented by the second channel meets a third condition, it indicates that there is a resource conflict in resources occupied by at least one of the multiple PSSCHs; if the information represented by the second channel meets a fourth condition, it means that there is no resource conflict in resources occupied by each of the multiple PSSCHs; the third condition and the fourth condition are different.

The second channel is time-division multiplexed or frequency-division multiplexed with PSCCH or PSSCH.

The first terminal further includes:
a first determination unit configured to determine frequency domain resources occupied by the second channel in a manner including:
calculating an index number of the second channel based on one or more of the following information:
an index number of the first terminal and an index number of the second terminal.

The first terminal further includes:
a second determination unit configured to determine the index number of the second channel in any of the following ways:

when a feedback mode is unicast and multicast and feedback is only required on whether there is a resource conflict, using a Layer-1 source identity document (L1 source ID) of the second terminal to calculate the index number of the second channel;
when the feedback mode is multicast and feedback is required on whether there is a resource conflict, using the L1 source ID of the second terminal and a member ID to which the first terminal belongs to calculate the index number of the second channel.

If the second channel and PSFCH occupy different symbols in a same slot or occupy different slots, the calculating an index number of the second channel, includes:

$$PSRCH\_Index = (K+M)Mod(L*Y)$$

wherein PSRCH_Index represents the index number of the second channel;
K represents a truncated layer-2 (L2) source ID carried in sidelink control information (SCI) associated with PSSCH transmitted by the first terminal or the second terminal;
M represents a calculation parameter, which is related to a resource conflict feedback mode;
L represents the number of PRBs of candidate resources of the second channel;
Y represents the number of cyclic shift value pairs of resource conflict feedback that can be carried in a PRB.

When the resource conflict feedback mode is unicast resource conflict feedback, M=0;
when the resource conflict feedback mode is multicast resource conflict feedback, M=0 or M is a multicast member ID of a receiving terminal.

The first terminal further includes:

a first receiving unit configured to receive second indication information; wherein the second indication information is used to indicate a priority between a first mode and a second mode, the first mode is to indicate whether a resource indicated by SCI is received correctly, and the second mode is to indicate whether there is a resource conflict on the resource indicated by the SCI;
if it is determined according to the second indication information that a priority of the first mode is higher than a priority of the second mode, the first transmission unit is configured to only feed back by the first terminal, through the Type2 PSFCH, whether the resource indicated by the SCI is received correctly;
if it is determined according to the second indication information that the priority of the first mode is lower than the priority of the second mode, the first transmission unit is configured to only indicate, through the Type2 PSFCH, whether there is a resource conflict on the resource indicated by the SCI.

In a sixth aspect, one embodiment of the present disclosure further provides a second terminal, including:

a first receiving unit configured to receive first indication information; wherein the first indication information is used to indicate whether there is a resource conflict on a target physical sidelink shared channel (PSSCH) resource;
a first processing unit configured to select a transmission resource, according to the first indication information;
wherein the first channel is a sequence-based second channel; or, the first channel is Type2 PSFCH.

In a seventh aspect, one embodiment of the present disclosure further provides a processor-readable storage medium, inclduing: a computer program stored thereon; wherein the computer program is used to cause a processor to execute steps of the above information processing method.

In this embodiment of the present disclosure, the first terminal transmits the first indication information to the second terminal through the first channel, and the first indication information is used to indicate whether there is a resource conflict on the target PSSCH resource. In this way, when selecting resources, the second terminal can not only consider the resource conflict perceived by itself, but also the content indicated by the first indication information, thereby reducing a probability of data packet transmission failure caused by resource conflicts, and then improving a success rate of data transmission on a sidelink.

**BRIEF DESCRIPTION OF THE DRAWINGS**

FIG. 1 is a first schematic flowchart of an information processing method according to an embodiment of the present disclosure;

FIG. 2(a) is a first schematic diagram of channel multiplexing according to an embodiment of the present disclosure;

FIG. 2(b) is a second schematic diagram of channel multiplexing according to an embodiment of the present disclosure;

FIG. 3(a) is a first schematic diagram showing channel configuration according to an embodiment of the present disclosure;

FIG. 3(b) is a second schematic diagram showing channel configuration according to an embodiment of the present disclosure;

FIG. 4(a) is a first schematic diagram showing signal transmission according to an embodiment of the present disclosure;

FIG. 4(b) is a second schematic diagram showing signal transmission according to an embodiment of the present disclosure;

FIG. 5 is a second schematic flowchart of an information processing method according to an embodiment of the present disclosure;

FIG. 6 is a first schematic diagram of a first terminal according to an embodiment of the present disclosure;

FIG. 7 is a first schematic diagram of a second terminal according to an embodiment of the present disclosure;

FIG. 8 is a second schematic diagram of a first terminal according to an embodiment of the present disclosure; and

FIG. 9 is a second schematic diagram of a second terminal according to an embodiment of the present disclosure.

**DETAILED DESCRIPTION**

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

Embodiments of the present disclosure provide an information processing method, a terminal and a readable storage medium, which can improve a success rate of data transmission on a sidelink. The method and devices are based on the same application concept, and principles of the method and the devices to solve the problem are similar, and thus implementation of the devices and the method can be referred to each other, and repeated details will not be repeated.

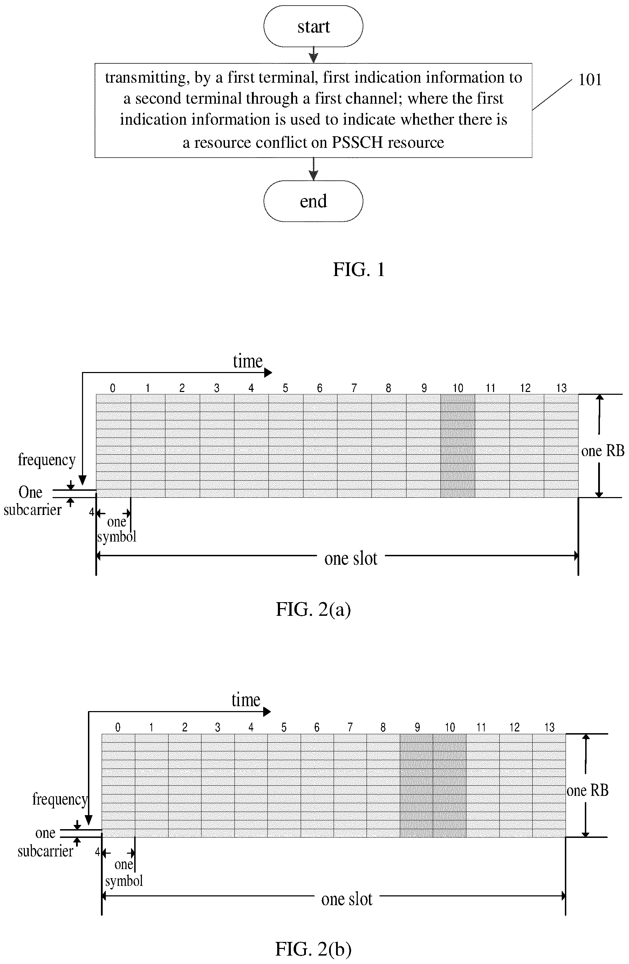

Referring to FIG. 1, FIG. 1 is a flow chart of an information processing method according to an embodiment of the present disclosure. As shown in FIG. 1, the method includes the following steps.

Step 101: transmitting, by a first terminal, first indication information to a second terminal through a first channel. The first indication information is used to indicate whether there is a resource conflict on a target physical sidelink shared channel (PSSCH) resource. The first channel is a sequence-based second channel; or, the first channel is a Type 2 physical sidelink feedback channel (Type2 PSFCH).

In one embodiment of the present disclosure, the second channel may be, for example, a physical sidelink resource conflict indication channel (PSRCH). PSRCH uses a sequence-based approach, that is, different sequences or the same sequence with different cyclic shifts (CS) are used to indicate whether there is a resource conflict in the PSSCH resource corresponding to the PSRCH.

When the first channel is a sequence-based second channel, in this step, the first terminal transmits the first indication information to the second terminal through different sequences of the second channel, where the first indication information is used to indicate whether there is a resource conflict in resources occupied by PSSCH corresponding to the second channel; or, the first terminal transmits the first indication information to the second terminal through the same sequence with different cyclic shift values of the second channel, where the first indication information is used to indicate whether there is a resource conflict in resources occupied by PSSCH corresponding to the second channel.

A sequence length of the second channel is 12 and occupies 12 subcarriers of a resource block (RB); the cyclic shift value is selected from a set {1, 2, 3, 6}.

If different sequences are used, sequence #1 can be used to indicate that the PSSCH resource corresponding to the PSRCH has a resource conflict, and sequence #2 can be used to indicate that there is no resource conflict. If the same sequence is used, then CS#1 of the same sequence is used to indicate that the PSSCH resource corresponding to the PSRCH has a resource conflict, and CS#2 is used to indicate that there is no resource conflict. CS#1 and CS#2 correspond to the same sequence of different cyclic shift values.

In this embodiment of the present disclosure, the second channel occupies one or two symbols. When the second channel occupies two symbols, a first symbol occupied by the second channel and a second symbol occupied by the second channel are duplicated. Here, the meaning of duplication refers to being mapped to the same sequence.

As shown in FIG. 2(a), the first terminal transmits PSRCH on a tenth symbol of a certain RB which is occupied by the first terminal. The PSRCH occupies 12 subcarriers of one RB and occupies one symbol. On this RB, a sequence of length 12 is placed on 12 subcarriers of the RB, and cyclic shift values of a sequence includes candidate values such as {1, 2, 3, 6}, which can accommodate more PSRCH channel. If different PSRCH channels use the same sequence, then CS#1 of the same sequence is used to indicate that the PSSCH resource corresponding to the PSRCH has a resource conflict, and CS#2 is used to indicate that there is no resource conflict. If different PSRCH channels use different sequences, then sequence #1 is used to indicate that the PSSCH resource corresponding to the PSRCH has a resource conflict, and sequence #2 is used to indicate that there is no resource conflict.

As shown in FIG. 2(b), the first terminal transmits PSRCH on a ninth symbol and a tenth symbol of a certain RB which is occupied by the first terminal. The PSRCH occupies 12 subcarriers of one RB and occupies two symbols, and the ninth symbol is an exact duplication of the tenth symbol. In this case, firstly, PSRCH on the ninth symbol can be used for automatic gain control (AGC); secondly, the ninth symbol and the tenth symbol are mapped to the same sequence, which is equivalent to symbol duplication, thereby improving a reception success rate of the PSRCH channel.

In practical applications, one second channel is used to indicate whether there is a resource conflict in resources occupied by one or more PSSCHs.

Specifically, when one second channel is used to indicate whether there is a resource conflict in the resources occupied by one PSSCH, if information represented by the second channel meets a first condition, it means that there is a resource conflict in the resources occupied by the PSSCH; if the information represented by the second channel meets a second condition, it means that there is no resource conflict in the resources occupied by the PSSCH. The first condition and the second condition are different. The information represented by the second channel may refer to content indicated by information carried by the second channel, etc. The first condition and the second condition may be preset values, preset characters, etc.

For example, a Yes/No-based mechanism may be used to indicate whether there is a resource conflict in resources occupied by a PSSCH. If the information represented by the second channel is Yes, it indicates that there is a resource conflict in the resources occupied by one PSSCH; if the information represented by the second channel is No, it indicates that there is no resource conflict in the resources occupied by one PSSCH.

When one second channel is used to indicate whether there is a resource conflict in resources occupied by multiple PSSCHs, if information represented by the second channel meets a third condition, it indicates that there is a resource conflict in resources occupied by at least one of the multiple PSSCHs; if the information represented by the second channel meets a fourth condition, it means that there is no resource conflict in resources occupied by each of the multiple PSSCHs. The third condition and the fourth condition are different. The third condition and the fourth condition may be preset values, preset characters, etc.

For example, a Yes-based mechanism may be used to indicate whether there is a resource conflict in resources occupied by one PSSCH. If the information represented by the second channel is Yes, it means that there is a resource conflict in resources occupied by at least one PSSCH of the multiple PSSCHs; if the information represented by the second channel is No, it means that there is no resource conflict in resources occupied by each of the multiple PSSCHs.

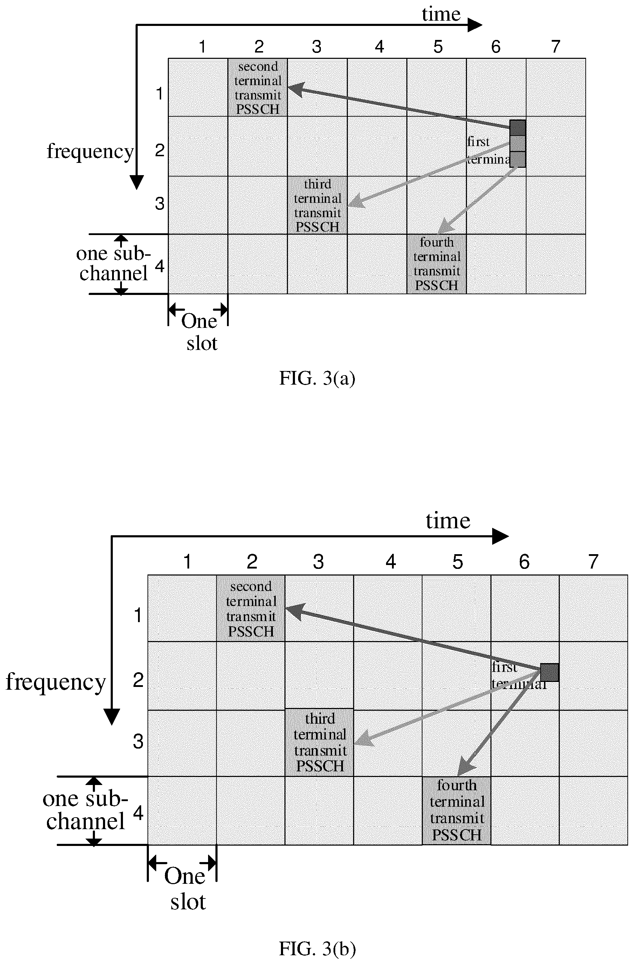

A subchannel is a frequency domain unit of resource allocation for a sidelink. A subchannel is composed of one or more physical resource blocks (PRB) consecutive in the frequency domain. As shown in FIG. 3(a), the second terminal transmits PSSCH on a sub-channel 1 in a slot 2, a third terminal transmits PSSCH on a sub-channel 3 in a slot 3, and a fourth terminal transmits PSSCH on a sub-channel 4 in a slot 5. The first terminal detects a resource conflict of resources used by the PSSCH of the second terminal/third terminal/fourth terminal. The first terminal uses three PSRCH channels on a sub-channel 2 in a slot 6 to respectively indicate whether there is a resource conflict in resources occupied by each of the three PSSCHs. Three small squares in the sub-channel 2 in the slot 6 shown in the figure represent three PSRCH channels, respectively; and each PSRCH channel occupies one RB in the frequency domain and two orthogonal frequency division multiplex (OFDM) symbols in the time domain.

In this way, the first terminal transmits resource conflict information to the second terminal/third terminal/fourth terminal through three PSRCHs. If there is a resource conflict, the second terminal/third terminal/fourth terminal will change transmission resources to avoid occurrence of resource conflicts. At this point, a Yes/No-based response mechanism can be used, that is, when one PSRCH channel indicates whether there is a resource conflict in the resources occupied by a PSSCH channel, "Yes" or "No" is used to indicate whether there is a resource conflict for the PSSCH channel.

As shown in FIG. 3(b), the first terminal detects a resource conflict of resources used by the PSSCH of the second terminal/third terminal/fourth terminal. The first terminal uses one PSRCH channel on a sub-channel 2 in a slot 6 to simultaneously indicate whether there is a resource conflict in resources occupied by each of the three PSSCHs. One small square in the sub-channel 2 in the slot 6 shown in the figure represent the one PSRCH channel; and the one PSRCH channel occupies one RB in the frequency domain and two OFDM symbols in the time domain.

In this way, the first terminal transmits the resource conflict information to the second terminal/C/D through one PSRCH. If there is a resource conflict, the second terminal/third terminal/fourth terminal will change transmission resources to avoid occurrence of resource conflicts. At this point, a Yes-based response mechanism can be used, that is, when one PSRCH channel indicates whether there is a resource conflict in the resources occupied by each of multiple PSSCH channels, "Yes" is used to indicate that there is a resource conflict in resources occupied by at least one of the multiple PSSCH channels, and "No" is used to indicate that there is no resource conflict in resources occupied by each of the multiple PSSCH channels.

With this resource conflict information indication method, the first terminal transmits resource conflict related information to the second terminal through the PSRCH, so that the terminal can consider the problem of resource conflicts in the resource selection process, thereby reducing a probability of data packet transmission failure caused by resource conflicts, and then improving a success rate of data transmission on a sidelink. For the Yes/No-based solution, one PSRCH is corresponding to one PSSCH, and can independently indicate the resource conflict situation of each PSSCH resource. For the Yes-based solution, one PSRCH is corresponding to multiple PSSCHs, and the signaling overhead is small.

In this embodiment of the present disclosure, the second channel is time-division multiplexed or frequency-division multiplexed with PSCCH or PSSCH, thereby reducing delay and increasing reliability.

For example, the second channel (such as PSRCH) occupies two symbols before PSFCH and is time-division multiplexed with the PSFCH in related art. The second channel (such as PSRCH) and PSFCH occupy different frequency domain resources, for example, they occupy different resource pools and are isolated through the resource pools.

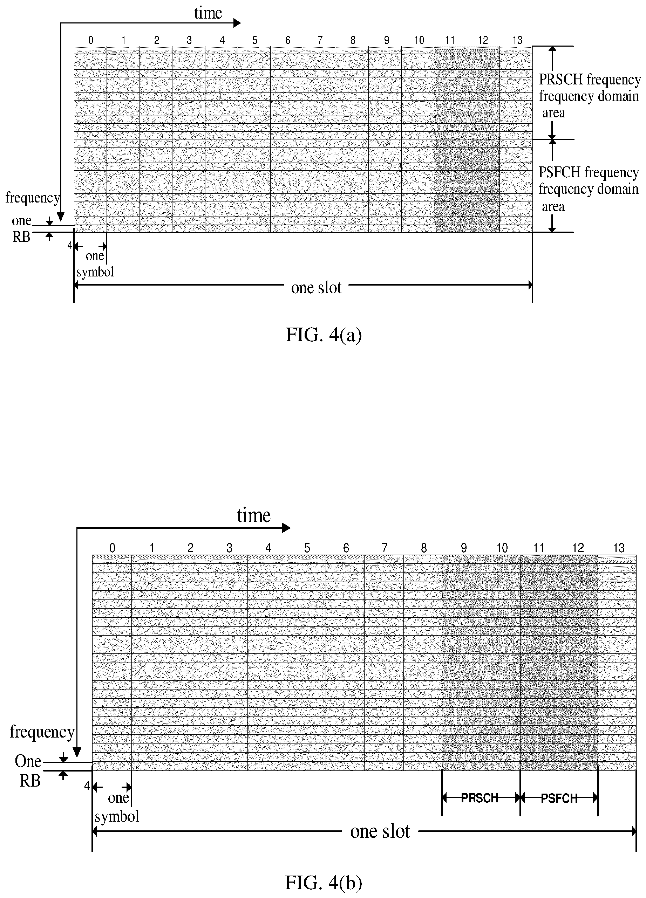

As shown in FIG. 4(a), PSRCH and PSFCH are frequency-division multiplexed. PSRCH and PSFCH occupy different frequency domain resources, thereby avoiding conflicts of resources used by PSRCH and PSFCH. In addition, PSRCH and PSFCH are in the same time domain resource, and they both occupy symbols 11 and 12.

As shown in FIG. 4(b), PSRCH and PSFCH are time-division multiplexed. PSRCH and PSFCH occupy different time domain resources. PSRCH occupies symbol 9 and symbol 10, and PSFCH occupies symbol 11 and symbol 12, which avoids conflicts of resources used by PSRCH and PSFCH. In addition, PSRCH and PSFCH are in the same frequency domain resource.

With this resource conflict information indication method, the first terminal transmits resource conflict related information to the second terminal through the PSRCH, so that the terminal can consider the problem of resource conflicts in the resource selection process, thereby reducing a probability of data packet transmission failure caused by resource conflicts, and then improving a success rate of data transmission on a sidelink. For the frequency division multiplexing solution, there is no impact on PSSCH resources. For the time division multiplexing solution, there is no impact on PSFCH resources.

An index number of the second channel may be calculated based on one or more of the following information:

an index number of the first terminal and an index number of the second terminal.

When a feedback mode is unicast and multicast and feedback is only required on whether there is a resource conflict, a Layer-1 source identity document (L1 source ID) of the second terminal is used to calculate an index number of the second channel. When the feedback mode is multicast and feedback is required on whether there is a resource conflict, the L1 source ID of the second terminal and a member ID to which the first terminal belongs are used to calculate the index number of the second channel.

If the second channel and PSFCH occupy different symbols in the same slot or occupy different slots, the index number of the second channel is calculated as follows:

$$PSRCH\_Index = (K+M)Mod(L*Y)$$

where PSRCH_Index represents the index number of the second channel;
K represents a truncated layer-2 (L2) source ID carried in sidelink control information (SCI) associated with PSSCH transmitted by the first terminal or the second terminal;
M represents a calculation parameter, which is related to a resource conflict feedback mode;
L represents the number of PRBs of candidate resources of the second channel;
Y represents the number of cyclic shift value pairs of resource conflict feedback that can be carried in a PRB.

In the above formula, a value of M is varied according to different resource conflict feedback modes. When the resource conflict feedback mode is unicast resource conflict feedback, M=0; when the resource conflict feedback mode is multicast resource conflict feedback, M=0 or M is a multicast member ID of a receiving terminal.

The value of M is as follows:

in unicast, M=0;
in multicast resource conflict feedback option 1 (option1), M=0;
in multicast resource conflict feedback option 2 (option 2), M is a multicast member ID of the receiving terminal (that is, the first terminal or other terminals that receive PSSCH sent by the second terminal).

When PSRCH and PSFCH are frequency division multiplexed, a dedicated resource pool can be set for PSRCH.

When the first channel is Type2 PSFCH, the first terminal transmits the first indication information to the second terminal through Type2 PSFCH on a target resource. The target resource is PSFCH resource which is not used by terminals of a target type. The terminal of the target type of terminal may include a transmit (Tx) UE with groupcast hybrid automatic repeat request (HARQ) option 2. In this case, the Type2 PSFCH may be used to only indicate whether there is a resource conflict. At this point, the first indication information may be sidelink (SL) HARQ acknowledgment (ACK)/negative acknowledgment (NACK) information.

When the first channel is a Type2 PSFCH, the Type2 PSFCH not only feeds back whether a resource indicated by SCI is received correctly, but also feeds back whether there is a resource conflict on the resource.

At this point, for example, Type2 PSFCH carries 2 bits, one of which indicates ACK/NACK, and the other bit indicates whether there is a resource conflict.

Further, the first terminal may further receive second indication information. The second indication information is used to indicate a priority between a first mode and a second mode. The first mode is to indicate whether a resource indicated by SCI is received correctly. The second mode is to indicate whether there is a resource conflict on the resource indicated by the SCI.

When the first indication information is used to indicate whether the resource indicated by the SCI is received correctly and whether there is a resource conflict on the resource indicated by the SCI, if it is determined according to the second indication information that the priority of the first mode is higher than the priority of the second mode, then the first terminal only feeds back, through the Type2 PSFCH, whether the resource indicated by the SCI is received correctly; if it is determined according to the second indication information that the priority of the first mode is lower than the priority of the second mode, then the first terminal only indicates, through the Type2 PSFCH, whether there is a resource conflict on the resource indicated by the SCI.

When the SL HARQ ACK/NACK feedback information has a higher priority, only ACK/NACK information is fed back. When the resource conflict information has a higher priority, only the resource conflict information is fed back.

In this embodiment of the present disclosure, the first terminal transmits the first indication information to the second terminal through the first channel, and the first indication information is used to indicate whether there is a resource conflict on the target PSSCH resource. In this way, when selecting resources, the second terminal can not only consider the resource conflict perceived by itself, but also the content indicated by the first indication information, thereby reducing a probability of data packet transmission failure caused by resource conflicts, and then improving a success rate of data transmission on a sidelink.

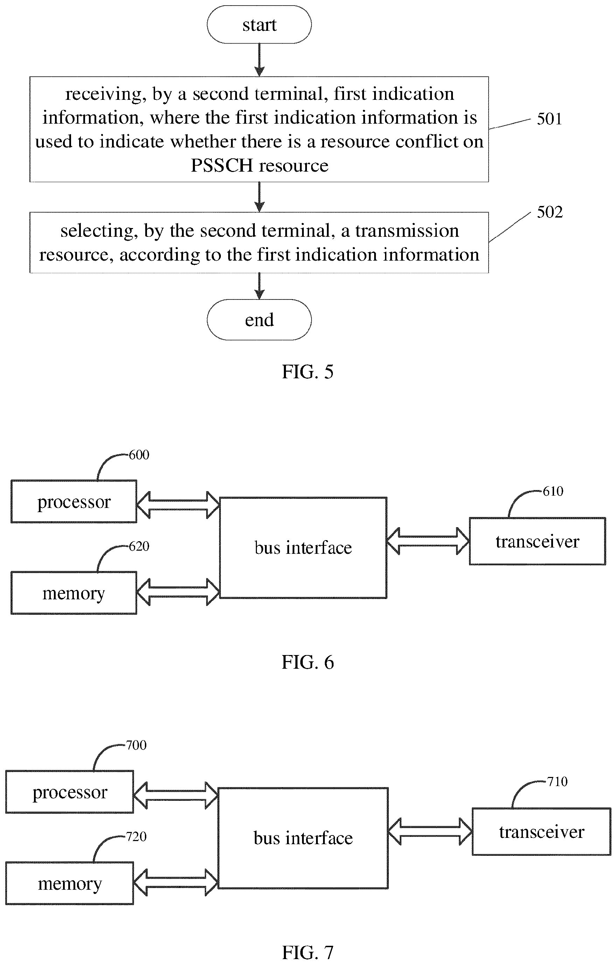

Referring to FIG. 5, FIG. 5 is a flowchart of an information processing method according to an embodiment of the present disclosure. As shown in FIG.5, the method includes the following steps.

Step 501: receiving, by a second terminal, first indication information, where the first indication information is used to indicate whether there is a resource conflict on a target physical sidelink shared channel (PSSCH) resource.

Step 502: selecting, by the second terminal, a transmission resource, according to the first indication information.

The first channel is a sequence-based second channel; or, the first channel is Type2 PSFCH.

When selecting transmission resources, the second terminal may consider resource conflicts perceived by itself and content indicated by the first indication information, thereby avoiding resource collisions.

In this embodiment of the present disclosure, the first terminal transmits the first indication information to the second terminal through the first channel, and the first indication information is used to indicate whether there is a resource conflict on the target PSSCH resource. In this way, when selecting resources, the second terminal can not only consider the resource conflict perceived by itself, but also the content indicated by the first indication information, thereby reducing a probability of data packet transmission failure caused by resource conflicts, and then improving a success rate of data transmission on a sidelink.

The technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

The terminal involved in the embodiments of the present disclosure may be a device that provides voice and/or data connectivity to a user, a handheld device with a wireless connection function, or other processing device coupled to a wireless modem. In different systems, names of terminals may be different. For example, in the 5G system, the terminal may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

As shown in Fig. 6, a first terminal according to an embodiment of the present disclosure includes: a processor 600 used to read a program in a memory 620 and perform the following process:

> transmitting first indication information to a second terminal through a first channel; where the first indication information is used to indicate whether there is a resource conflict on a target physical sidelink shared channel (PSSCH) resource; where the first channel is a sequence-based second channel; or, the first channel is a Type 2 physical sidelink feedback channel (Type2 PSFCH);
> a transceiver 610 used to receive and transmit data under control of the processor 600.

In FIG. 6, a bus architecture may include any number of interconnected bus and bridge. Specifically, various circuits of one or more processors, which are represented by the processor 600, and one or more memories, which are represented by the memory 620, are linked together. The bus architecture may link various other circuits, such as a peripheral device, voltage regulator and a power management circuit together. These features are well known in this field; therefore, this disclosure does not make further description on these features. The bus interface provides an interface. The transceiver 610 may be multiple elements, including a transmitter and a receiver and provide units, which communicate with other devices on the transmission medium. The processor 600 is responsible for managing the bus architecture and the normal processing. The memory 620 may be used to store data used by the processor 600 for performing operations.

Optionally, the processor 600 may be a central processing unit (CPU), an application specific integrated circuit (ASIC), a field-programmable gate array (FPGA) or a complex programmable logic device (CPLD). The processor may also adopt multi-core architecture.

The processor 600 is responsible for managing the bus architecture and the normal processing. The memory 620 may be used to store data used by the processor 600 for performing operations.

The processor 600 is further used to read the program and perform the following steps:

> transmitting the first indication information to the second terminal through different sequences of the second channel, where the first indication information is used to indicate whether there is a resource conflict in resources occupied by PSSCH corresponding to the second channel; or,
> transmitting the first indication information to the second terminal through the same sequence with different cyclic shift values of the second channel, where the first indication information is used to indicate whether there is a resource conflict in resources occupied by PSSCH corresponding to the second channel.

A sequence length of the second channel is 12 and occupies 12 subcarriers of a resource block (RB); the cyclic shift value is selected from a set {1, 2, 3, 6}.

The second channel occupies one or two symbols. When the second channel occupies two symbols, a first symbol occupied by the second channel and a second symbol occupied by the second channel are duplicated.

When one second channel is used to indicate whether there is a resource conflict in the resources occupied by one PSSCH, if information represented by the second channel meets a first condition, it means that there is a resource conflict in the resources occupied by the PSSCH; if the information represented by the second channel meets a second condition, it means that there is no resource conflict in the resources occupied by the PSSCH. The first condition and the second condition are different.

When one second channel is used to indicate whether there is a resource conflict in resources occupied by multiple PSSCHs, if information represented by the second channel meets a third condition, it indicates that there is a resource conflict in resources occupied by at least one of the multiple PSSCHs; if the information represented by the second channel meets a fourth condition, it means that there is no resource conflict in resources occupied by each of the multiple PSSCHs. The third condition and the fourth condition are different.

The second channel is time-division multiplexed or frequency-division multiplexed with PSCCH or PSSCH.

The processor 600 is further used to read the program and perform the following steps: calculating an index number of the second channel based on one or more of the following information: an index number of the first terminal and an index number of the second terminal.

The processor 600 is further used to read the program and perform the following steps:

when a feedback mode is unicast and multicast and feedback is only required on whether there is a resource conflict, using a Layer-1 source identity document (L1 source ID) of the second terminal to calculate an index number of the second channel; when the feedback mode is multicast and feedback is required on whether there is a resource conflict, using the L1 source ID of the second terminal and a member ID to which the first terminal belongs to calculate the index number of the second channel.

The processor 600 is further used to read the program and perform the following steps: if the second channel and PSFCH occupy different symbols in the same slot or occupy different slots, calculating the index number of the second channel as follows:

$$PSRCH\_Index = (K+M)Mod(L*Y)$$

where PSRCH_Index represents the index number of the second channel; K represents a truncated layer-2 (L2) source ID carried in sidelink control information (SCI) associated with PSSCH transmitted by the first terminal or the second terminal; M represents a calculation parameter, which is related to a resource conflict feedback mode; L represents the number of PRBs of candidate resources of the second channel; Y represents the number of cyclic shift value pairs of resource conflict feedback that can be carried in a PRB.

When the resource conflict feedback mode is unicast resource conflict feedback, M=0; when the resource conflict feedback mode is multicast resource conflict feedback, M=0 or M is a multicast member ID of a receiving terminal.

The processor 600 is further used to read the program and perform the following steps: transmitting the first indication information to the second terminal through Type2 PSFCH on a target resource, where the target resource is PSFCH resource which is not used by terminals of a target type.

The processor 600 is further used to read the program and perform the following steps:

receiving second indication information; where the second indication information is used to indicate a priority between a first mode and a second mode, the first mode is to indicate whether a resource indicated by SCI is received correctly, and the second mode is to indicate whether there is a resource conflict on the resource indicated by the SCI; if it is determined according to the second indication information that the priority of the first mode is higher than the priority of the second mode, only feeding back, through the Type2 PSFCH, whether the resource indicated by the SCI is received correctly; if it is determined according to the second indication information that the priority of the first mode is lower than the priority of the second mode, only indicating, through the Type2 PSFCH, whether there is a resource conflict on the resource indicated by the SCI.

It is to be noted that the foregoing first terminal provided in the embodiments of the present disclosure can perform all the method steps performed by the first terminal in the foregoing method embodiments, and can achieve the same technical effect. The parts and beneficial effects in this embodiment that are the same as those in the method embodiment will not be described in detail here.

As shown in FIG. 7, a second terminal according to one embodiment of the present disclosure includes: a processor 700 used to read a program in a memory 720 and perform the following process:

transmitting, by a first terminal, first indication information to a second terminal through a first channel; where the first indication information is used to indicate whether there is a resource conflict on a target physical sidelink shared channel (PSSCH) resource; where the first channel is a sequence-based second channel; or, the first channel is a Type 2 physical sidelink feedback channel (Type2 PSFCH); a transceiver 710 used to receive and transmit data under control of the processor 700.

In FIG. 7, a bus architecture may include any number of interconnected bus and bridge. Specifically, various circuits of one or more processors, which are represented by the processor 700, and one or more memories, which are represented by the memory 720, are linked together. The bus architecture may link various other circuits, such as a peripheral device, voltage regulator and a power management circuit together. These features are well known in this field; therefore, this disclosure does not make further description on these features. The bus interface provides an interface. The transceiver 710 may be multiple elements, including a transmitter and a receiver and provide units, which communicate with other devices on the transmission medium. The processor 700 is responsible for managing the bus architecture and the normal processing. The memory 720 may be used to store data used by the processor 700 for performing operations.

Optionally, the processor 710 may be a central processing unit (CPU), an application specific integrated circuit (ASIC), a field-programmable gate array (FPGA) or a complex programmable logic device (CPLD). The processor may also adopt multi-core architecture.

The processor 700 is responsible for managing the bus architecture and the normal processing. The memory 720 may be used to store data used by the processor 700 for performing operations.

It is to be noted that the foregoing second terminal provided in the embodiments of the present disclosure can perform all the method steps performed by the second terminal in the foregoing method embodiments, and can achieve the same technical effect. The parts and beneficial effects in this embodiment that are the same as those in the method embodiment will not be described in detail here.

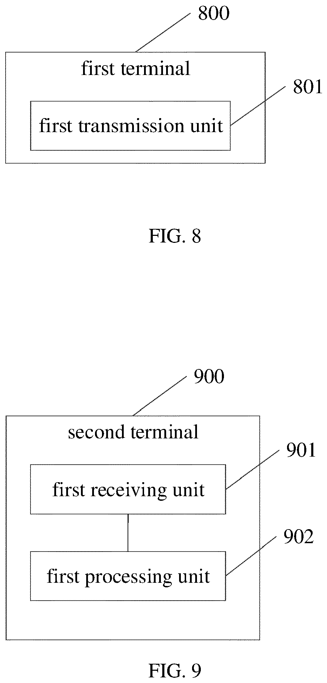

As shown in FIG. 8, a first terminal 800 according to one embodiment of the present disclosure includes:

a first transmission unit 801 configured to transmit first indication information to a second terminal through a first channel; where the first indication information is used to indicate whether there is a resource conflict on a target physical sidelink shared channel (PSSCH) resource;

where the first channel is a sequence-based second channel; or, the first channel is a Type 2 physical sidelink feedback channel (Type2 PSFCH).

When the first channel is a sequence-based second channel, the first transmission unit 801 is configured to transmit the first indication information to the second terminal through different sequences of the second channel, where the first indication information is used to indicate whether there is a resource conflict in resources occupied by PSSCH corresponding to the second channel; or, transmit the first indication information to the second terminal through the same sequence with different cyclic shift values of the second channel, where the first indication information is used to indicate whether there is a resource conflict in resources occupied by PSSCH corresponding to the second channel.

A sequence length of the second channel is 12 and occupies 12 subcarriers of a resource block (RB); the cyclic shift value is selected from a set {1, 2, 3, 6}.

The second channel occupies one or two symbols. When the second channel occupies two symbols, a first symbol occupied by the second channel and a second symbol occupied by the second channel are duplicated.

One second channel is used to indicate whether there is a resource conflict in resources occupied by one or more PSSCHs.

When one second channel is used to indicate whether there is a resource conflict in the resources occupied by one PSSCH, if information represented by the second channel meets a first condition, it means that there is a resource conflict in the resources occupied by the PSSCH; if the information represented by the second channel meets a second condition, it means that there is no resource conflict in the resources occupied by the PSSCH. The first condition and the second condition are different.

When one second channel is used to indicate whether there is a resource conflict in resources occupied by multiple PSSCHs, if information represented by the second channel meets a third condition, it indicates that there is a resource conflict in resources occupied by at least one of the multiple PSSCHs; if the information represented by the second channel meets a fourth condition, it means that there is no resource conflict in resources occupied by each of the multiple PSSCHs. The third condition and the fourth condition are different.

The second channel is time-division multiplexed or frequency-division multiplexed with PSCCH or PSSCH.

The terminal may further include:
a first determination unit configured to determine frequency domain resources occupied by the second channel in the following manner including:
calculating an index number of the second channel based on one or more of the following information:
an index number of the first terminal and an index number of the second terminal.

The terminal may further include:
a second determination unit configured to calculate the index number of the second channel in any of the following ways:

when a feedback mode is unicast and multicast and feedback is only required on whether there is a resource conflict, using a Layer-1 source identity document (L1 source ID) of the second terminal to calculate an index number of the second channel;

when the feedback mode is multicast and feedback is required on whether there is a resource conflict, using the L1 source ID of the second terminal and a member ID to which the first terminal belongs to calculate the index number of the second channel.

If the second channel and PSFCH occupy different symbols in the same slot or occupy different slots, the second determination unit calculates the index number of the second channel as follows:

$$PSRCH\_Index = (K+M)Mod(L*Y)$$

where PSRCH_Index represents the index number of the second channel;

K represents a truncated layer-2 (L2) source ID carried in sidelink control information (SCI) associated with PSSCH transmitted by the first terminal or the second terminal;

M represents a calculation parameter, which is related to a resource conflict feedback mode;

L represents the number of PRBs of candidate resources of the second channel;

Y represents the number of cyclic shift value pairs of resource conflict feedback that can be carried in a PRB.

When the resource conflict feedback mode is unicast resource conflict feedback, M=0; when the resource conflict feedback mode is multicast resource conflict feedback, M=0 or M is a multicast member ID of a receiving terminal.

The first transmission unit is configured to transmit the first indication information to the second terminal through Type2 PSFCH on a target resource, where the target resource is PSFCH resource which is not used by terminals of a target type.

The terminal may further include:

a first receiving unit configured to receive second indication information; where the second indication information is used to indicate a priority between a first mode and a second mode, the first mode is to indicate whether a resource indicated by SCI is received correctly, and the second mode is to indicate whether there is a resource conflict on the resource indicated by the SCI.

If it is determined according to the second indication information that the priority of the first mode is higher than the priority of the second mode, the first receiving unit only feeds back, through the Type2 PSFCH, whether the resource indicated by the SCI is received correctly.

If it is determined according to the second indication information that the priority of the first mode is lower than the priority of the second mode, the first receiving unit only indicates, through the Type2 PSFCH, whether there is a resource conflict on the resource indicated by the SCI.

It is to be noted that the foregoing first terminal provided in the embodiments of the present disclosure can perform all the method steps performed by the first terminal in the foregoing method embodiments, and can achieve the same technical effect. The parts and beneficial effects in this embodiment that are the same as those in the method embodiment will not be described in detail here.

As shown in FIG. 9, a second terminal 900 according to one embodiment of the present disclosure includes:

a first receiving unit 901 configured to receive first indication information; where the first indication information is used to indicate whether there is a resource conflict on a target physical sidelink shared channel (PSSCH) resource;

a first processing unit 902 configured to select a transmission resource, according to the first indication information.

The first channel is a sequence-based second channel; or, the first channel is Type2 PSFCH.

It is to be noted that the foregoing second terminal provided in the embodiments of the present disclosure can perform all the method steps performed by the second terminal in the foregoing method embodiments, and can achieve the same technical effect. The parts and beneficial effects in this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a readable storage medium, which includes a computer program stored thereon. The computer program is used to cause a processor to execute steps of the foregoing information processing method embodiment, with the same technical effect achieved, which will not be described in detail here. The readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

It is to be noted that, in the present disclosure, the terms "include", "including" or any other variations thereof are intended to cover a non-exclusive inclusion, such that a process, method, article or device that includes a series of elements not only includes those elements, but also includes other elements which not expressly listed or inherent to the process, method, article or device. Without further limitations, an element defined by a statement "includes a..." does not exclude presence of additional identical elements in a process, method, article or device that includes that element.

Through the above description of the embodiments, those skilled in the art can clearly understand that the methods of the above embodiments may be implemented by means of software plus necessary general hardware platform, of course, implemented by hardware, but in many cases the former is better. According to such understanding, the essence of the technical solution of the present disclosure or the part that contributes to the related art may be embodied in the form of a software product. The computer software product is stored in a storage medium (such as ROM/RAM, magnetic disk, optical disk), and includes several instructions which enables a terminal (which may be a mobile phone, computer, server, air conditioner, or network device, etc.) to execute the methods described in various embodiments of the present disclosure.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

The embodiments of the present disclosure have been described above in conjunction with the accompanying drawings. However, the present disclosure is not limited to the above specific implementations. The above specific implementations are only illustrative and not restrictive. In view of the present disclosure, persons having ordinary skill in the art may make modifications without departing from the spirit of the present disclosure and scope of claims, all of which fall within the protection of the present disclosure.

**Claims**

1. An information processing method, comprising:

   transmitting, by a first terminal, first indication information to a second terminal through a first channel; wherein the first indication information is used to indicate whether there is a resource conflict on a target physical sidelink shared channel (PSSCH) resource;
   wherein the first channel is a sequence-based second channel; or, the first channel is a Type 2 physical sidelink feedback channel (Type2 PSFCH).

2. The method according to claim 1, wherein when the first channel is the sequence-based second channel, the transmitting, by a first terminal, first indication information to a second terminal through a first channel, comprises:

transmitting, by the first terminal, the first indication information to the second terminal through different sequences of the second channel, wherein the first indication information is used to indicate whether there is a resource conflict in resources occupied by PSSCH corresponding to the second channel; or,
transmitting, by the first terminal, the first indication information to the second terminal through a same sequence with different cyclic shift values of the second channel, wherein the first indication information is used to indicate whether there is a resource conflict in resources occupied by PSSCH corresponding to the second channel.

3. The method according to claim 2, wherein a sequence length of the second channel is 12 and occupies 12 subcarriers of a resource block (RB); the cyclic shift value is selected from a set {1, 2, 3, 6}.

4. The method according to claim 2, wherein the second channel occupies one or two symbols; when the second channel occupies two symbols, a first symbol occupied by the second channel and a second symbol occupied by the second channel are duplicated.

5. The method according to claim 2, wherein one second channel is used to indicate whether there is a resource conflict in resources occupied by one or more PSSCHs.

6. The method according to claim 5, wherein when one second channel is used to indicate whether there is a resource conflict in resources occupied by one PSSCH, if information represented by the second channel meets a first condition, it means that there is a resource conflict in the resources occupied by the PSSCH; if the information represented by the second channel meets a second condition, it means that there is no resource conflict in the resources occupied by the PSSCH; the first condition and the second condition are different.

7. The method according to claim 5, wherein when one second channel is used to indicate whether there is a resource conflict in resources occupied by multiple PSSCHs, if information represented by the second channel meets a third condition, it indicates that there is a resource conflict in resources occupied by at least one of the multiple PSSCHs; if the information represented by the second channel meets a fourth condition, it means that there is no resource conflict in resources occupied by each of the multiple PSSCHs; the third condition and the fourth condition are different.

8. The method according to claim 2, wherein the second channel is time-division multiplexed or frequency-division multiplexed with PSCCH or PSSCH.

9. The method according to claim 2, further comprising determining frequency domain resources occupied by the second channel in a manner including: calculating an index number of the second channel based on one or more of the following information: an index number of the first terminal and an index number of the second terminal.

10. The method according to claim 9, further comprising determining the index number of the second channel in any of the following ways:

when a feedback mode is unicast and multicast and feedback is only required on whether there is a resource conflict, using a Layer-1 source identity document (L1 source ID) of the second terminal to calculate the index number of the second channel;
when the feedback mode is multicast and feedback is required on whether there is a resource conflict, using the L1 source ID of the second terminal and a member ID to which the first terminal belongs to calculate the index number of the second channel.

11. The method according to claim 9, wherein if the second channel and PSFCH occupy different symbols in a same slot or occupy different slots, the calculating an index number of the second channel, includes:

$$PSRCH\_Index=(K+M)Mod(L*Y)$$

wherein PSRCH_Index represents the index number of the second channel;
K represents a truncated layer-2 (L2) source ID carried in sidelink control information (SCI) associated with PSSCH transmitted by the first terminal or the second terminal;
M represents a calculation parameter, which is related to a resource conflict feedback mode;
L represents the number of PRBs of candidate resources of the second channel;
Y represents the number of cyclic shift value pairs of resource conflict feedback that can be carried in a PRB.

12. The method according to claim 11, wherein

when the resource conflict feedback mode is unicast resource conflict feedback, M=0;
when the resource conflict feedback mode is multicast resource conflict feedback, M=0 or M is a multicast member ID of a receiving terminal.

13. The method according to claim 1, wherein when the first channel is Type2 PSFCH, the transmitting, by a first terminal, first indication information to a second terminal through a first channel, includes:
transmitting the first indication information to the second terminal through the Type2 PSFCH on a target resource, wherein the target resource is PSFCH resource which is not used by terminals of a target type.

14. The method according to claim 13, further comprising:

receiving, by the first terminal, second indication information; wherein the second indication information is used to indicate a priority between a first mode and a second mode, the first mode is to indicate whether a resource indicated by SCI is received correctly, and the second mode is to indicate whether there is a resource conflict on the resource indicated by the SCI;
wherein when the first indication information is used to indicate whether the resource indicated by the SCI is received correctly and whether there is a resource conflict on the resource indicated by the SCI, the transmitting, by a first terminal, first indication information to a second terminal through a first channel, includes:

if it is determined according to the second indication information that a priority of the first mode is higher than a priority of the second mode, only feeding back by the first terminal, through the Type2 PSFCH, whether the resource indicated by the SCI is received correctly;
if it is determined according to the second indication information that the priority of the first mode is lower than the priority of the second mode, only indicating by the first terminal, through the Type2 PSFCH, whether there is a resource conflict on the resource indicated by the SCI.

15. An information processing method, comprising:

receiving, by a second terminal, first indication information; wherein the first indication information is used to indicate whether there is a resource conflict on a target physical sidelink shared channel (PSSCH) resource; and
selecting, by the second terminal, a transmission resource, according to the first indication information;
wherein the first channel is a sequence-based second channel; or, the first channel is Type2 PSFCH.

16. A first terminal, comprising: a memory, a transceiver and processor;
wherein the memory is used to store a computer program; the transceiver is used to receive and transmit data under control of the processor; the processor is used to read the computer program in the memory and perform the following steps:

transmitting first indication information to a second terminal through a first channel; wherein the first indication information is used to indicate whether there is a resource conflict on a target physical sidelink shared channel (PSSCH) resource;
wherein the first channel is a sequence-based second channel; or, the first channel is a Type 2 physical sidelink feedback channel (Type2 PSFCH).

17. The first terminal according to claim 16, wherein when the first channel is the sequence-based second channel, the processor is further used to read the computer program in the memory and perform the following steps:

transmitting the first indication information to the second terminal through different sequences of the second channel, wherein the first indication information is used to indicate whether there is a resource conflict in resources occupied by PSSCH corresponding to the second channel; or,
transmitting the first indication information to the second terminal through a same sequence with different cyclic shift values of the second channel, wherein the first indication information is used to indicate whether there is a resource conflict in resources occupied by PSSCH corresponding to the second channel.

18. The first terminal according to claim 16, wherein when the first channel is Type2 PSFCH, the processor is further used to read the computer program in the memory and perform the following steps:
transmitting the first indication information to the second terminal through the Type2 PSFCH on a target resource, wherein the target resource is PSFCH resource which is not used by terminals of a target type.

19. A second terminal, comprising: a memory, a transceiver and processor;
wherein the memory is used to store a computer program; the transceiver is used to receive and transmit data under control of the processor; the processor is used to read the computer program in the memory and perform the following steps:

transmitting first indication information to a second terminal through a first channel; wherein the first indication information is used to indicate whether there is a resource conflict on a target physical sidelink shared channel (PSSCH) resource;

wherein the first channel is a sequence-based second channel; or, the first channel is a Type 2 physical sidelink feedback channel (Type2 PSFCH).

20. A first terminal, comprising:

a first transmission unit configured to transmit first indication information to a second terminal through a first channel; wherein the first indication information is used to indicate whether there is a resource conflict on a target physical sidelink shared channel (PSSCH) resource;

wherein the first channel is a sequence-based second channel; or, the first channel is a Type 2 physical sidelink feedback channel (Type2 PSFCH).

21. A second terminal, comprising:

a first receiving unit configured to receive first indication information; wherein the first indication information is used to indicate whether there is a resource conflict on a target physical sidelink shared channel (PSSCH) resource;

a first processing unit configured to select a transmission resource, according to the first indication information;

wherein the first channel is a sequence-based second channel; or, the first channel is Type2 PSFCH.

22. A processor-readable storage medium, comprising: a computer program stored thereon; wherein the computer program is used to cause a processor to execute the method according to any one of claims 1 to 15.

start

transmitting, by a first terminal, first indication information to a second terminal through a first channel; where the first indication information is used to indicate whether there is a resource conflict on PSSCH resource                                    101

end

FIG. 1

FIG. 2(a)

FIG. 2(b)

FIG. 3(a)

FIG. 3(b)

FIG. 4(a)

FIG. 4(b)

start

↓

receiving, by a second terminal, first indication information, where the first indication information is used to indicate whether there is a resource conflict on PSSCH resource — 501

↓

selecting, by the second terminal, a transmission resource, according to the first indication information — 502

↓

end

FIG. 5

processor — 600

memory — 620

bus interface

transceiver — 610

FIG. 6

processor — 700

memory — 720

bus interface

transceiver — 710

FIG. 7

800

```
┌─────────────────────────────────┐
│          first terminal         │
│  ┌───────────────────────────┐  │
│  │  first transmission unit  │  │
│  └───────────────────────────┘  │
└─────────────────────────────────┘
```

801

FIG. 8

900

```
┌─────────────────────────────────┐
│          second terminal        │
│  ┌───────────────────────────┐  │
│  │     first receiving unit  │  │
│  └───────────────────────────┘  │
│               │                 │
│  ┌───────────────────────────┐  │
│  │    first processing unit  │  │
│  └───────────────────────────┘  │
└─────────────────────────────────┘
```

901

902

FIG. 9

**EP 4 383 804 A1**

| INTERNATIONAL SEARCH REPORT | International application No. |
|---|---|
| | **PCT/CN2022/104134** |

**A. CLASSIFICATION OF SUBJECT MATTER**

H04W 28/04(2009.01)i; H04W 76/14(2018.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 冲突, 指示, 资源, V2X, 直通链路, 直连链路, PSSCH, PSFCH, PSRCH, collision, indication, resource, sidelink

**C. DOCUMENTS CONSIDERED TO BE RELEVANT**

| Category* | Citation of document, with indication, where appropriate, of the relevant passages | Relevant to claim No. |
|---|---|---|
| X | QUALCOMM INC. "Reliability and Latency Enhancements for Mode 2"<br>*3GPP TSG RAN WG1 Meeting #104-e R1-2101910*, 05 February 2021 (2021-02-05), sections 2-3 | 1-22 |
| A | CN 109644458 A (BEIJING XIAOMI MOBILE SOFTWARE CO., LTD.) 16 April 2019 (2019-04-16)<br>entire document | 1-22 |
| A | CN 111865505 A (RESEARCH INSTITUTE OF CHINA MOBILE COMMUNICATIONS CORPORATION et al.) 30 October 2020 (2020-10-30)<br>entire document | 1-22 |
| A | CN 110677883 A (ZTE CORP.) 10 January 2020 (2020-01-10)<br>entire document | 1-22 |
| A | US 2021037549 A1 (QUALCOMM INC.) 04 February 2021 (2021-02-04)<br>entire document | 1-22 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 September 2022** | **28 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| | | International application No. |
| --- | --- | --- |
| | | **PCT/CN2022/104134** |

| Patent document cited in search report | | | Publication date (day/month/year) | Patent family member(s) | | | Publication date (day/month/year) |
| --- | --- | --- | --- | --- | --- | --- | --- |
| CN | 109644458 | A | 16 April 2019 | US | 2022014325 | A1 | 13 January 2022 |
| | | | | WO | 2020103135 | A1 | 28 May 2020 |
| | | | | EP | 3886490 | A1 | 29 September 2021 |
| | | | | IN | 202147024425 | A | 25 June 2021 |
| CN | 111865505 | A | 30 October 2020 | None | | | |
| CN | 110677883 | A | 10 January 2020 | WO | 2021063318 | A1 | 08 April 2021 |
| US | 2021037549 | A1 | 04 February 2021 | BR | 112022000918 | A2 | 08 March 2022 |
| | | | | CN | 114175690 | A | 11 March 2022 |
| | | | | KR | 20220042121 | A | 04 April 2022 |
| | | | | EP | 4005322 | A1 | 01 June 2022 |
| | | | | TW | 202110256 | A | 01 March 2021 |
| | | | | WO | 2021022136 | A1 | 04 February 2021 |
| | | | | IN | 202147061806 | A | 04 February 2022 |
| | | | | VN | 85688 | A | 25 April 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110897357